# FASCICULE DE BREVET EUROPEEN

(11) **EP 4 094 117 B1**
(45) Date de publication et mention de la délivrance du brevet: **15.01.2025**
(21) Numéro de dépôt: 21700962.0
(22) Date de dépôt: 21.01.2021
(51) Int. Cl.: G02B 27/01, G02C 7/04

(54) **LENTILLE DE CONTACT POUR RÉALITÉ AUGMENTÉE ET PROCÉDÉ CORRESPONDANT**
KONTAKTLINSE MIT AUGMENTED REALITY UND ENTSPRECHENDES VERFAHREN
AUGMENTED REALITY CONTACT LENS AND CORRESPONDING METHOD

(30) Priorité: 21.01.2020 FR 2000575
(43) Date de publication de la demande: 30.11.2022
(73) Titulaire: Institut Mines Telecom, 91120 Palaiseau (FR)
(72) Inventeur: DE BOUGRENET DE LA TOCNAYE, Jean-Louis, 29820 Guilers (FR); NOURRIT, Vincent, 29200 Brest (FR); HEGGARTY, Kevin, 29290 Lanrivoare (FR)
(74) Mandataire: Cabinet Nony
(86) Numéro de dépôt international: PCT/EP2021/051357
(87) Numéro de publication internationale: WO 2021/148548

(56) Documents cités:
- EP-A1- 2 778 766
- WO-A2-2019/231306
- JP-A- 2005 311 823
- US-B1- 9 798 147
- US-B1- 9 810 910

## Description

La présente invention concerne une lentille de contact pour réalité augmentée et un procédé correspondant.

Par réalité augmentée, on comprend le fait de superposer une image représentant du texte, un symbole, ou un dessin, etc., à une scène réelle captée par l'œil. La réalité augmentée est le principe de base de la réalité étendue (XR, de l'anglais « Extended Reality), ainsi que de la réalité mélangée/fusionnée (MR, de l'anglais « Mixed/Merged Reality »).

Comme exemple de dispositif de réalité augmentée, le brevet américain publié sous le numéro US 8,786,675 B2 décrit une lentille de contact pour réalité augmentée comprenant :
- un corps transparent conçu pour être posé sur un œil ;
- une source optique de lumière fixée au corps transparent et conçue pour émettre une lumière dans le corps transparent ; et
- un élément optique fixé au corps transparent et conçu pour recevoir la lumière de la source optique et l'envoyer en direction de l'œil.

Dans ce document, la source optique de lumière est constituée d'une matrice de pixels. Dans un mode de réalisation particulier, la lentille de contact comporte un miroir pour réfléchir la lumière vers l'élément optique qui est une lentille convergente, de sorte que l'image de la matrice de pixels soit focalisée sur la rétine de l'œil.

Cet assemblage présente l'inconvénient d'être relativement complexe à mettre en œuvre. Il est encombrant et peut présenter des problèmes d'alignement optique avec un risque de masquage de la vision de l'utilisateur de son environnement.

La demande de brevet publiée sous le numéro JP2005311823 décrit une lentille de contact dans laquelle une matrice de pixels est générée au moyen d'un guide optique comprenant une pluralité de lignes optiques et une source optique adaptée à illuminer les lignes optiques. Chaque pixel de la matrice est activé en appliquant localement un champ électrique par des électrodes de manière à modifier localement l'indice de réfraction de la ligne optique. La lentille de contact comprend en outre un hologramme configuré pour faire converger les rayons lumineux émis par la matrice de pixels au centre de la pupille de l'œil afin de réaliser une illumination Maxwellienne.

À nouveau, cet assemblage présente l'inconvénient d'être relativement complexe à mettre en œuvre. Il est encombrant et peut présenter des problèmes d'alignement optique avec un risque de masquage de la vision de l'utilisateur de son environnement.

Les documents US9810910 B1 et US9798147 B1 présentent une lentille de contact plus compacte utilisant un hologramme générant une image envoyée dans l'œil quand l'hologramme est illuminé.

Il peut ainsi être souhaité de prévoir une lentille de contact pour réalité augmentée qui permette de s'affranchir d'au moins une partie des problèmes et contraintes précités.

Il est donc proposé une lentille de contact pour réalité augmentée, comprenant :
- un corps transparent conçu pour être posé sur un œil ;
- une source optique de lumière fixée au corps transparent et conçue pour émettre une lumière dans le corps transparent ; et
- un élément optique fixé au corps transparent et conçu pour recevoir la lumière de la source optique et l'envoyer en direction de l'œil ;
dans laquelle l'élément optique est un hologramme conçu pour diffracter la lumière reçue, sous forme d'une image holographique en direction de l'œil , caractérisée en ce que la lentille de contact présente une zone centrale formée uniquement d'un corps transparent, la zone centrale se trouvant sur l'axe optique de l'œil , devant la pupille, lorsque le corps transparent est posé sur l'œil dans sa position privilégiée.

Ainsi, la source optique peut être très simple et compacte car elle n'a pas à créer d'image contrairement à une matrice de pixels mais simplement à émettre de la lumière. En effet, selon l'invention l'image est créée par l'hologramme. En particulier, une telle source optique peut être nettement plus compacte qu'une matrice de pixels.

De façon optionnelle, une lentille de contact pour réalité augmentée selon l'invention peut en outre comporter tout ou parties des caractéristiques suivantes prises seules ou en combinaison :
- la source optique est monochromatique et/ou ponctuelle ;
- la lentille de contact comporte en outre un guide optique conçu pour guider la lumière de la source optique à l'hologramme ;
- le guide optique comporte un substrat transparent et une couche de matériau réfléchissant recouvrant une surface extérieure du substrat transparent ;
- au moins un parmi la source optique et l'hologramme est disposé à l'intérieur du substrat transparent de manière à être partiellement ou bien totalement entouré par le substrat transparent ;
- la lentille de contact comprend : un récepteur radio fixé au corps transparent et conçu pour recevoir une commande ; et un module d'activation sélective du module de réalité augmentée en fonction de la commande reçue ;
- le module d'activation sélective comporte un dispositif de modification d'indice conçu pour modifier un indice de réfraction du guide optique afin de modifier l'éclairement de l'hologramme pour que ce dernier cesse de fournir l'image holographique ; et
- le module d'activation sélective est conçu pour désactiver la source optique.

Il est également proposé un procédé de réalité augmentée comportant :
- la pose d'un corps transparent d'une lentille de contact sur un œil ;
- l'émission d'une lumière dans le corps transparent par une source optique fixée au corps transparent ; et
- la réception de la lumière par un élément optique fixé au corps transparent et l'envoi de la lumière en direction de l'œil par l'élément optique ;
dans lequel l'élément optique est un hologramme el la lumière envoyée en direction de l'œil est de la lumière diffractée par l'hologramme sous forme d'une image holographique, caractérisé en ce que la lentille de contact présente une zone centrale formée uniquement d'un corps transparent, la zone centrale se trouvant sur l'axe optique de l'œil , devant la pupille, lorsque le corps transparent est posé sur l'œil dans sa position privilégiée.

L'invention sera mieux comprise à l'aide de la description qui va suivre, donnée uniquement à titre d'exemple et faite en se référant aux dessins annexés dans lesquels :
[Fig. 1] la figure 1 est une vue de coupe transversale d'une lentille de contact de réalité augmentée selon l'invention, et d'un œil sur laquelle elle est posée ;
[Fig. 2] la figure 2 est une vue de derrière de la lentille de contact de réalité augmentée de la figure 1, c'est-à-dire lorsque cette lentille de contact est observée depuis l'œil ;
[Fig. 3] la figure 3 est une vue similaire à la figure 1, où les éléments de la lentille de contact sont plus détaillés ;
[Fig. 4] la figure 4 est une vue fonctionnelle d'un module électronique de commande de sources optiques de la lentille de contact des figures précédentes ;
[Fig. 5] la figure 5 est un organigramme décrivant un procédé de réalité augmentée selon un mode de réalisation de l'invention ;
[Fig. 6] la figure 6 est une vue de derrière d'une lentille de contact de réalité augmentée selon une variante de réalisation de l'invention ; et
[Fig. 7] la figure 7 est une vue en coupe de la lentille de contact des figures 1 à 3 ou bien de la figure 6, lors d'une encapsulation d'un dispositif de réalité augmentée dans un corps transparent de la lentille de contact.

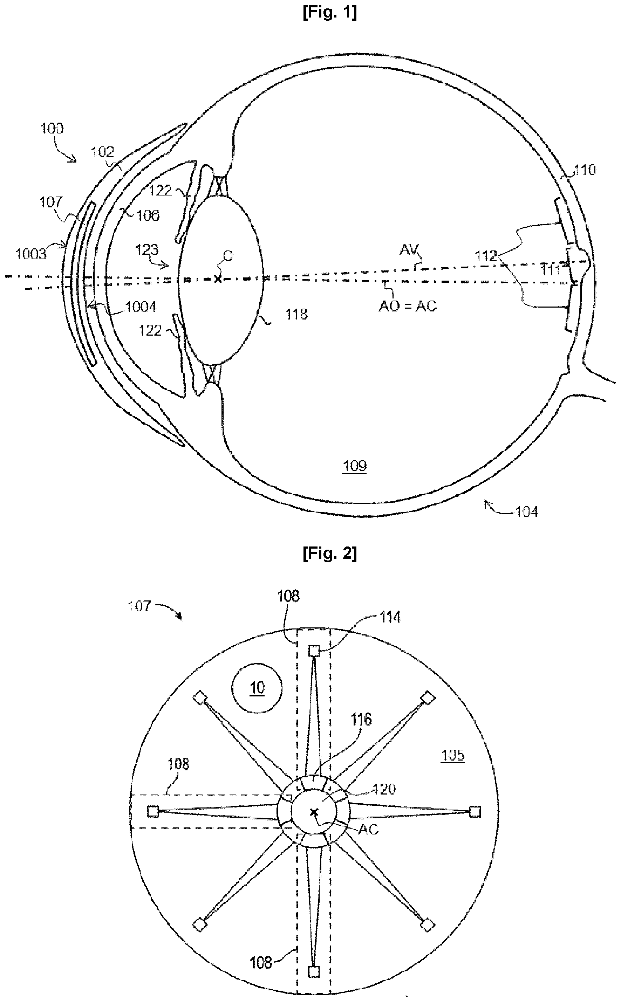

En référence à la **figure 1**, une lentille de contact 100 pour réalité augmentée selon l'invention va à présent être décrite.

La lentille de contact 100 est conçue pour être appliquée sur un œil 104 présentant un axe optique AO et un axe visuel AV s'intersectant en un point O. Comme cela est connu en soi, l'œil 104 comporte tout d'abord une cornée 106 sous la forme d'une calotte sphérique à l'interface avec l'air ambiant. L'œil 104 comporte en outre un iris 122 percé en son centre par une ouverture circulaire appelée pupille 123 par laquelle est transmise la lumière. L'iris 122 se dilate ou se contracte selon l'intensité lumineuse. L'œil 104 comporte en outre un cristallin 118 formé par un disque fibreux, transparent et flexible pour focaliser la lumière incidente reçue au travers de la pupille 123. Le point d'intersection O est généralement situé environ au centre du cristallin 118. Derrière le cristallin 118, de l'autre côté d'une cavité oculaire 109, l'œil 104 comporte en outre une rétine 110 formée de cellules sensorielles comprenant des cônes pour la vision diurne et des bâtonnets pour la vision nocturne. La rétine 110 présente une zone centrale, appelée fovéa 111, dans le prolongement de l'axe visuel AV, où la vision des détails est la plus précise. La fovéa 111 est ainsi excentrée de quelques degrés par rapport à l'axe optique AO. La rétine 110 présente en outre, autour de la fovéa 111, une zone, appelée parafovéa 112, correspondant à la vision périphérique. Comme cela est visible sur la figure 1, la cornée 106, la pupille de l'iris 122 et le cristallin 118 sont sensiblement centrés sur l'axe optique AO.

La lentille de contact 100 comporte tout d'abord un corps transparent 102 conçu pour être posé sur l'œil 104.

Le corps transparent 102 présente une forme de disque bombé autour d'un axe central AC avec une face arrière concave 1004 et une face avant convexe 1003. La face arrière 1004 présente une forme complémentaire de la cornée 106 afin d'être plaquée contre la cornée 106, dans une position privilégiée de la lentille de contact 100 illustrée sur la figure 1. Dans cette position privilégiée, la lentille de contact 100 est centrée sur l'axe optique AO, de sorte que l'axe central AC du corps transparent 102 soit sensiblement confondu avec l'axe optique AO.

Comme le corps transparent 102 vient au contact de la cornée 106, il est réalisé en matériau biocompatible par exemple à base de silicone hydrogel ou de HEMA (*Hydroxy Ethyl Methacrylate*) où tout autre matériau approprié comme décrit par C. Stephen, A. Musgrave et F. Fang dans l'article intitulé « Contact Lens Materials: A Materials Science Perspective » publié dans la revue Materials, Vol. 14, 261, January 2019*.*

La lentille de contact 100 comporte en outre un dispositif de réalité augmentée 107 encapsulé dans le corps transparent 102 de la lentille de contact 100.

En référence à la **figure 2****,** le dispositif de réalité augmentée 107 va à présent être décrit plus en détail.

Le dispositif de réalité augmentée 107 présente par exemple une forme générale de couronne plate ou bien d'anneau plat ayant un centre situé sur l'axe central AC du corps transparent 102. Le dispositif de réalité augmentée 107 comporte un substrat transparent 105 destiné à guider la lumière comme cela sera expliqué par la suite. Le substrat transparent 105 comporte par exemple un cristal liquide.

Le dispositif de réalité augmentée 107 comporte en outre au moins un module de réalité augmentée 108. Dans l'exemple illustré sur la figure 2, les modules de réalité augmentée 108 sont au nombre de huit et distribués en étoile, de sorte que chaque module de réalité augmentée 108 soit aligné le long d'une branche de l'étoile.

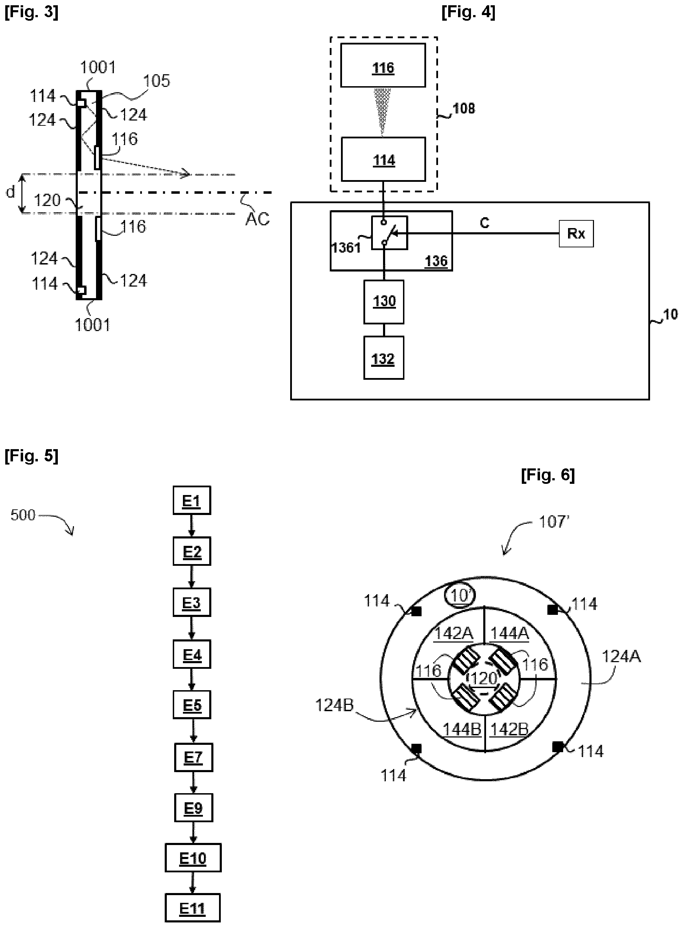

Le dispositif de réalité augmentée 107 comporte en outre un module de commande 10 des modules de réalité augmentée 108, fixé au substrat transparent 105. Ce module de commande 10 sera décrit plus en détail plus loin, en référence à la figure 5.

Chaque module de réalité augmentée 108 est conçu, une fois la lentille de contact 100 dans sa position privilégiée sur l'oeil 104, pour générer une image sur la rétine 110, en superposition à une scène réelle captée par l'oeil 104. Dans l'exemple décrit, l'image est un signe d'avertissement destiné à apparaître en vision périphérique. Ainsi, dans l'exemple décrit, l'image est de préférence générée sur la parafovéa 112. En outre, toujours dans l'exemple décrit, chaque module de réalité augmentée 108 est conçu pour fournir une image différente sur la rétine 110. Ainsi, dans le présent exemple, il est possible d'afficher jusqu'à huit images différentes sur la parafovéa 112.

Les modules de réalité augmentée 108 sont similaires les uns aux autres de sorte qu'un seul d'entre eux va à présent être décrit plus en détail.

Le module de réalité augmentée 108 comporte tout d'abord une source optique 114 fixée au substrat transparent 105 et conçue pour émettre une lumière dans le substrat transparent 105.

De préférence, la source optique 114 est ponctuelle, c'est-à-dire par exemple qu'elle présente une sortie de lumière de dimension inférieure à 100 µm, et monochromatique, c'est-à-dire par exemple que la lumière qu'elle émet présente un seul pic d'émission en longueur d'onde, ayant une largeur à mi-hauteur d'au plus 100 nm. Ce pic est situé dans la lumière visible, approximativement 400 - 750 nm, et de préférence dans le vert ou bien le rouge : 500 - 670 nm. Alternativement, le pic se situe dans les longueurs d'onde de sensibilité des photorécepteurs de la rétine 110, et plus particulièrement de la parafovéa 112 (par exemple 420 nm pour les bâtonnets et 534 nm pour les cônes-M).

De préférence encore, la source optique 114 présente une divergence de moins de 40°.

Par exemple, la source optique 114 comporte un laser et plus particulièrement au moins une diode laser à cavité verticale à émission surfacique dite VCSEL (*Vertical-Cavity Surface-Emitting Laser en* anglais). En effet, de manière avantageuse, ce type de source optique présente une taille réduite permettant ainsi de réduire sensiblement l'épaisseur de la lentille de contact 100, par rapport aux matrices de pixels utilisées dans les lentilles de contact de l'art antérieur.

Le module de réalité augmentée 108 comprend en outre un hologramme 116 fixé au substrat transparent 105 et conçu pour recevoir la lumière de la source optique 114 et l'envoyer en direction de l'œil 104, et plus précisément en direction du cristallin 118 au travers de la pupille 123. L'hologramme 116 est un élément optique diffractif désigné généralement par l'acronyme DOE (de l'anglais : *Diffractive Optical Element*). Ainsi, l'hologramme 116 est conçu pour diffracter la lumière reçue, sous forme d'une image holographique en direction de l'œil 104. Cette transformation est basée sur le phénomène de diffraction optique, de sorte que la lumière diffractée (l'image holographique) correspond par exemple à la transformée de Fresnel ou de Fourier spatiale de l'image finale que l'on souhaite imager sur la rétine 110. De préférence, les tissus traversés par la lumière sont pris en compte dans la conception de l'hologramme.

Ainsi, de manière générale, l'hologramme 116 est configuré pour créer et projeter l'image finale souhaitée sur la rétine de l'œil. Plus particulièrement, la structure de l'hologramme définit cette image. Comme indiqué précédemment, dans certains modes de réalisation, l'hologramme peut être configuré de manière à fournir la transformée de Fourier inverse spatiale de l'image finale à projeter sur la rétine. Dans d'autres modes de réalisation, l'hologramme peut être configuré pour mettre en œuvre une fonction optique supplémentaire telle que la transformée de Fresnel de l'image souhaitée.

En pratique, l'hologramme 116 comporte par exemple une lame de substrat transparent d'épaisseur constante, tel qu'une plaque en verre, sur ou dans lequel sont profilés des microstructures ou nanostructures configurées pour diffracter le front d'onde incident de manière à générer l'image holographique. Ces microstructures ou nanostructures forment un motif de diffraction. Alternativement, au lieu de fonctionner en transparence, l'hologramme 116 pourrait fonctionner en réflexion et être sous la forme d'un miroir réfléchissant.

Par exemple, l'hologramme 116 est obtenu en déposant une couche de résine photosensible (par exemple de type S1813) d'une épaisseur environ égale à 1,2 µm, à la surface du corps transparent 102, dans une zone située en regard d'une extrémité de la pupille 123, lorsque la lentille de contact 100 est dans sa position privilégiée sur l'œil 104. Un profil de phase à phase multi-niveaux est ensuite photo-inscrit dans la résine, les régions avoisinant l'hologramme 116 étant pleinement exposées. Lors d'une étape de développement, l'hologramme 116 est gravé dans la couche de résine, la résine autour de l'hologramme 116 étant supprimée. L'hologramme 116 ainsi obtenu présente par exemple une résolution d'environ 750 nm avec une profondeur de gravure d'environ 1000 nm.

Pour ne pas perturber la vision centrale de l'oeil 104, la lentille de contact 100 présente une zone centrale 120 formée uniquement du corps transparent 102. Cette zone centrale 120 se trouve sur l'axe optique AO, devant la pupille 123, lorsque le corps transparent est posé sur l'oeil 104 dans sa position privilégiée. Grâce à cette zone centrale 120, la pupille 123 est au moins en partie dégagée de tout élément pouvant dégrader la vision.

En particulier, dans l'exemple décrit, les hologrammes 116 des différents modules de réalité augmentée 108 sont agencés en anneau autour de la zone centrale 120. Cette couronne d'hologrammes 116 a son plus grand rayon égal à la mydriase (maximum d'ouverture de la pupille, par exemple, 8 mm) et son plus petit rayon tel que la zone centrale de la pupille 123 soit libre (par exemple, 2 mm), ce qui veut dire que la pupille 123 peut varier entre ces deux valeurs. Ainsi, chaque hologramme 116 a, dans l'exemple décrit, une dimension radiale d'au plus 6 mm. Dans le cas où la pupille 123 est égale au rayon minimum de la couronne holographique, aucune projection ne pourra se faire sur la rétine 110. Dans le cas contraire, une image sera toujours formée sur la rétine, même si l'hologramme 116 n'est que partiellement dégagé, car dans ce cas l'image holographique d'au moins une partie des motifs de l'hologramme 116 traverse tout de même la pupille 123, ce qui est suffisant, par le mode de conception dudit hologramme, pour permettre l'apparition d'une image finale sur la rétine 110, en contrepartie néanmoins d'une réduction du niveau d'illumination de la rétine 110. En effet, l'hologramme 116 comprend un motif périodique si bien que si une partie de celui-ci est occultée par la pupille 123, l'hologramme 116 permet de créer une image holographique qui est toujours imagée sur la rétine 110 via le cristallin 118 mais avec une intensité réduite et éventuellement avec une résolution réduite par rapport au cas où l'hologramme 116 n'est pas partiellement occulté par la pupille 123.

En référence à la **figure 3**, la zone centrale 120 a de préférence un diamètre d autour de l'axe central AC d'au moins 3 mm pour bien dégager la pupille 123.

Pour éviter qu'une partie de la lumière émise par la source optique 114 ne sorte du substrat transparent 105 avant d'atteindre l'hologramme 116, la lentille de contact 100 comporte en outre une couche de matériau réfléchissant 124 recouvrant au moins en partie la surface du substrat transparent 102, à l'exception de la zone centrale 120 de manière à ne pas occulter la vision centrale de l'oeil 104. Ainsi, le substrat transparent 105 et la couche de matériau réfléchissant 124 forme un guide optique guidant la lumière de la source optique 114 à l'hologramme 116 associé.

En dehors de la zone centrale 120, la couche de matériau réfléchissant 124 ne s'étend pas nécessairement sur tout le reste de la surface du substrat transparent 105. Par exemple, une périphérie 1001 du substrat transparent 105 peut être dépourvue de toute couche de matériau réfléchissant 124.

Par exemple, la couche de matériau réfléchissant 124 comporte de l'or. Dans ce cas, une couche réfléchissante très fine de l'ordre de quelques nanomètres peut être avantageusement réalisée par technique photo-lithographique, par exemple de type « lift-off ».

Alternativement, la couche de matériau réfléchissant 124 comprend de l'aluminium ou de l'argent, ce qui permet avantageusement de renforcer la solidité et le facteur de réflectivité de la couche de matériau réfléchissant 124.

Comme cela est visible sur la figure 3, la source optique 114 et l'hologramme 116 sont disposés à l'intérieur du substrat transparent 105, de manière à être partiellement entourés par le substrat transparent 105 et affleurer ce dernier. Alternativement, l'un ou les deux pourraient être entièrement entourés par le substrat transparent 105.

En référence à la **figure 4**, un exemple de réalisation du module de commande 10 va à présent être décrit plus en détail.

Le module de commande 10 comprend tout d'abord une source d'alimentation électrique 130, telle qu'une batterie 130. La source d'alimentation électrique 130 est en particulier conçue pour alimenter la source optique 114 de chaque module de réalité augmentée 108.

Le module de commande 10 comprend en outre des moyens de recharge de la batterie 132, par exemple de type inductifs.

Le module de commande 10 comprend en outre un récepteur radio Rx, par exemple Wi-Fi, conçu pour recevoir des commandes C.

La lentille de contact 100 comprend en outre un module 136 d'activation sélective du module de réalité augmentée 108 en fonction de la commande reçue C. Par exemple, le module d'activation sélective 136 comprend un interrupteur 1361 connecté entre la batterie 130 et la source optique 114.

En référence à la **figure 5**, un exemple de procédé 500 de réalité augmentée va à présent être décrit.

Ce procédé décrit plus précisément l'utilisation de l'un des modules de réalité augmentée 108, mais peut être appliqué à chacun des modules de réalité augmentée 108.

Au cours d'une étape E1, la lentille de contact 100 est posée sur l'oeil 104 de sorte que le corps transparent 102 et plus précisément sa face arrière 1004 soit posée sur la cornée 106, dans la position privilégiée telle qu'illustrée aux figures 1 et 3.

On suppose qu'initialement, le module de réalité augmentée 108 n'est pas activé, de sorte qu'il ne fournit pas d'image holographique.

Au cours d'une étape E2, le module d'activation sélective 136 reçoit, via le récepteur Rx, une commande C indiquant l'activation du module de réalité augmentée 108.

Au cours d'une étape E3, en réponse à la commande C, le module d'activation sélective 136 active le module de réalité augmentée 108 indiqué dans la commande C pour que ce dernier fournisse une image holographique. Dans l'exemple décrit, l'interrupteur 1361 qui était initialement en position ouverte, est fermé de sorte que la source d'alimentation électrique 130 alimente la source optique 114.

Au cours d'une étape E4, la source optique 114, à présent alimentée, émet de la lumière qui est guidée à l'intérieur du corps transparent 102, par réflexion optique entre les couches de matériau réfléchissant 124.

Au cours d'une étape E5, l'hologramme 116 associé à cette source optique 114 reçoit la lumière guidée.

Au cours d'une étape E7, l'hologramme 116 diffracte la lumière reçue pour former une image holographique envoyée en direction de l'oeil 104, et plus précisément en direction de la pupille 123.

Sur la figure 3, un rayon lumineux a été représenté en pointillé, de manière à matérialiser le trajet de la lumière de manière simplifiée. En réalité, une pluralité de rayons lumineux est émise par la source optique 114, de manière à former un faisceau lumineux.

Au cours d'une étape E9, le cristallin 118 reçoit l'onde diffractée par l'hologramme et participe à la reconstruction d'une image finale (correspondant à cette image holographique) sur la rétine 110.

Ainsi, l'image finale de l'objet virtuel apparaît sur la rétine 110 où elle se superpose à la scène réelle captée par l'oeil 104. Dans l'exemple décrit, la reconstruction optique a lieu dans la parafovéa 112 pour que l'image finale apparaisse dans la vision périphérique de l'oeil 104.

Plus précisément, l'image de l'objet virtuel est projetée à environ 10° de la fovéa 111 (ou bien, ce qui est équivalent, de l'axe optique AO) par rapport au point O pour éviter de perturber la vision centrale, ce qui correspond à 12-15° de l'axe optique AO par rapport au point O. De préférence, l'image finale s'étend sur au plus 2° de champ de vision (environ quatre pleines lunes), ce qui correspond à une longueur d'environ 1,15 mm sur la rétine 110. À une telle distance de la fovéa 111, la résolution neuronale est significativement réduite par rapport à la fovéa 111, de sorte que les plus petits détails de l'image finale devraient être d'au moins 48 micromètres pour être perçus.

Au cours d'une étape E10, le module d'activation sélective 136 reçoit, via le récepteur Rx, une commande C indiquant la désactivation du module de réalité augmentée 108.

Au cours d'une étape E11, en réponse à la commande C, le module d'activation sélective 136 désactive le module de réalité augmentée 108 indiqué dans la commande C pour que ce dernier ne fournisse plus d'image holographique. Dans l'exemple décrit, l'interrupteur 1361 est ouvert de sorte que la source d'alimentation électrique 130 n'alimente plus la source optique 114 et que cette dernière cesse d'émettre de la lumière.

En référence à la **figure 6**, une lentille de contact 100' selon une variante de réalisation de l'invention va à présent être décrite.

Cette variante de réalisation diffère essentiellement du précédent mode de réalisation décrit ci-avant sur le nombre de module de réalité augmentée (quatre au lieu de huit) et sur la manière dont les hologrammes destinés à être envoyés en direction de l'oeil sont sélectivement activés et désactivés.

Selon cette variante de réalisation, les sources optiques 114 émettent de la lumière en continu et le module d'activation sélective 136 comporte, pour chaque hologramme 116, un dispositif de modification d'indice 140 conçu pour modifier un indice de réfraction du substrat transparent 105, au moyen par exemple du cristal liquide qu'il contient. En effet, ce cristal liquide est un composant électro-optique biréfringent dont l'indice est modifié par l'application d'un champ électrique. Une fois l'indice modifié, les conditions de guidage (par exemple l'angle de déviation) sont modifiées de sorte que l'hologramme 116 n'est plus éclairé de manière à fournir l'image holographique.

Par exemple, le dispositif de modification d'indice 140 comporte au moins une paire d'électrodes conçue pour générer le champ électrique modifiant l'indice de réfraction, du moins dans une direction. Dans l'exemple décrit, ces électrodes sont réalisées par des plaques de matériau réfléchissant 124. Plus précisément, le matériau réfléchissant 124 comporte, sur une face avant du substrat transparent 105, un grand anneau 124A et, sur une face arrière du substrat transparent 105, un petit anneau 124B. Ce petit anneau 124B est divisé en quatre segments 142A, 142B, 144A, 144B isolés électriquement les uns des autres et connectés au dispositif de commande 10'. Chaque paire de segments opposés forme une paire d'électrodes.

Ainsi, sur réception d'une commande C, le module d'activation sélective 136 est conçu pour appliquer une tension entre les électrodes associées au module de réalité augmentée 108 concerné par la commande C, afin de modifier l'indice de réfraction du substrat transparent 105 s'étendant entre les électrodes. Ainsi, l'hologramme 116 du module de réalité augmentée 108 n'est plus éclairé de manière adéquate pour fournir l'image holographique.

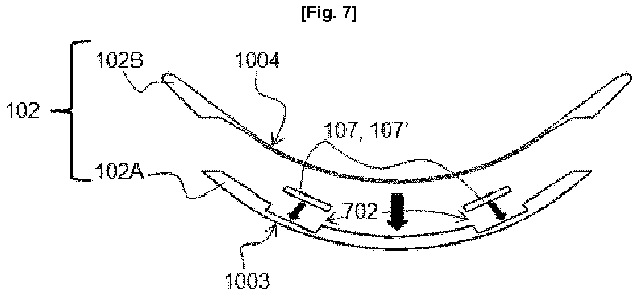

En référence à la **figure 7**, le corps transparent 102 comporte par exemple une base 102A présentant un logement 702 de réception du dispositif de réalité augmentée 107 ou 107', ainsi qu'un couvercle 102B conçu pour recouvrir la base et le dispositif de réalité augmentée 107 ou 107' reçu dans le logement 702.

D'après la description précédente, on comprend bien que c'est l'hologramme qui créé l'image holographique, lorsqu'il est illuminé par la source optique. Dans ce cas, la source optique fournit une lumière neutre ne comportant aucune image ni information d'image (par exemple, un faisceau de lumière d'intensité uniforme). Ainsi, l'hologramme éclairé uniquement par la source optique est capable de créer une image en direction de l'œil. Au contraire des techniques de l'art antérieur, aucun écran ou matrice de pixels n'est nécessaire. En particulier, la source optique peut être aussi simple qu'une source ponctuelle éclairant seule l'hologramme.

Il apparaît clairement qu'une lentille de contact pour réalité augmentée telle que celles décrites précédemment permet de superposer sur la rétine de l'œil une image à une scène réelle captée par l'œil, et ce de façon compacte et simple.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

En particulier, la nature et les propriétés d'émission de la source optique pourront être adaptées en fonction de l'application visée.

En outre, un élément optique, par exemple une lentille de Fresnel, pourrait être placé entre la source optique 114 et l'hologramme 116 afin de mettre en forme le faisceau pour améliorer les conditions d'imagerie.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

## Revendications

1. Lentille de contact (100 ; 100') pour réalité augmentée comprenant :
- un corps transparent (102) conçu pour être posé sur un œil (104) ;
- au moins un module de réalité augmentée (108) comportant :
• une source optique (114) fixée au corps transparent (102) et conçue pour émettre une lumière dans le corps transparent (102) ;
• un élément optique (116) fixé au corps transparent et conçu pour recevoir la lumière de la source optique (114) et l'envoyer en direction de l'œil (104) ;
dans laquelle la source optique (114) est conçue pour émettre de la lumière, reçue par l'élément optique (116), ne comportant pas d'image et en ce que l'élément optique (116) est un hologramme conçu pour diffracter la lumière reçue afin de créer une image holographique en direction de l'œil (104) **caractérisée en ce que** la lentille de contact présente une zone centrale (120) formée uniquement du corps transparent (102), la zone centrale se trouvant sur l'axe optique de l'œil (AO), devant la pupille (123), lorsque le corps transparent est posé sur l'œil (104) dans sa position (10) privilégiée.

2. Lentille selon la revendication 1, comprenant plusieurs modules de réalité augmentée (108), chaque module (108) étant conçu pour fournir une image finale différente sur la rétine (110).

3. Lentille de contact (100 ; 100') selon la revendication 1 ou 2, dans laquelle la source optique (114) est monochromatique et/ou ponctuelle.

4. Lentille de contact (100 ; 100') selon l'une des revendications 1 à 3, comportant en outre un guide optique (105, 124) conçu pour guider la lumière de la source optique (114) à l'hologramme (116).

5. Lentille de contact (100 ; 100') selon la revendication 4, dans laquelle le guide optique comporte un substrat transparent (105) et une couche de matériau réfléchissant (124) recouvrant une surface extérieure du substrat transparent (105).

6. Lentille de contact (100 ; 100') selon la revendication 5, dans laquelle au moins un parmi la source optique (114) et l'hologramme (116) est disposé à l'intérieur du substrat transparent (105) de manière à être partiellement ou bien totalement entouré par le substrat transparent (105).

7. Lentille de contact (100 ; 100') selon l'une quelconque des revendications 1 à 6 comprenant :
- un récepteur radio (Rx) fixé au corps transparent (102) et conçu pour recevoir une commande (C) ; et
- un module d'activation sélective (136 ; 136') de chaque module de réalité augmentée (108) en fonction de la commande reçue (C).

8. Lentille de contact (100 ; 100') selon l'une quelconque des revendications 4 à 6 prise ensemble avec la revendication 7, dans laquelle le module d'activation sélective (136') comporte un dispositif de modification d'indice (140) conçu pour modifier un indice de réfraction du guide optique (105, 124) afin de modifier l'éclairement de l'hologramme (116) pour que ce dernier cesse de fournir l'image holographique.

9. Lentille de contact (100 ; 100') selon la revendication 8, dans laquelle le module d'activation sélective (136) est conçu pour désactiver la source optique (114).

10. Procédé de réalité augmentée (500) comportant :
- la pose (E1) d'un corps transparent (102) d'une lentille de contact (100) sur un œil (104) ;
- l'émission (E4) d'une lumière dans le corps transparent (102) par une source optique (114) fixée au corps transparent (102) ; et
- la réception (E5) de la lumière par un élément optique (116) fixé au corps transparent (102) et l'envoi (E7) de la lumière en direction de l'œil (104) par l'élément optique (116) ;
dans lequel la lumière émise par la source optique (114), et reçue par l'élément optique (116), ne comporte pas d'image et l'élément optique (116) est un hologramme diffractant la lumière reçue afin de créer une image holographique en direction de l'œil (104) **caractérisé en ce que** la lentille de contact présente une zone centrale (120) formée uniquement du corps transparent (102), la zone centrale se trouvant sur l'axe optique de l'œil (AO), devant la pupille (123), lorsque le corps transparent est posé sur l'œil (104) dans sa position (10) privilégiée.

## Patentansprüche

1. Kontaktlinse (100; 100') für Augmented Reality, umfassend:
- einen transparenten Körper (102), der dazu gestaltet ist, auf ein Auge (104) gesetzt zu werden;
- mindestens ein Augmented-Reality-Modul (108), beinhaltend:
• eine optische Quelle (114), die an dem transparenten Körper (102) befestigt ist und dazu gestaltet ist, ein Licht in den transparenten Körper (102) zu emittieren;
• ein optisches Element (116), das an dem transparenten Körper befestigt ist und dazu gestaltet ist, das Licht der optischen Quelle (114) zu empfangen und es in Richtung des Auges (104) zu senden;
wobei die optische Quelle (114) dazu gestaltet ist, Licht zu emittieren, das von dem optischen Element (116) empfangen wird, das kein Bild beinhaltet, und dadurch, dass das optische Element (116) ein Hologramm ist, das dazu gestaltet ist, das empfangene Licht zu brechen, um ein holografisches Bild in Richtung des Auges (104) zu erzeugen, **dadurch gekennzeichnet, dass** die Kontaktlinse einen zentralen Bereich (120) aufweist, der nur aus dem transparenten Körper (102) gebildet wird, wobei sich der zentrale Bereich auf der optischen Achse des Auges (AO), vor der Pupille (123), befindet, wenn der transparente Körper auf das Auge (104) in seiner bevorzugten Position (10) gesetzt ist.

2. Linse nach Anspruch 1, umfassend mehrere Augmented-Reality-Module (108), wobei jedes Modul (108) dazu gestaltet ist, ein unterschiedliches endgültiges Bild auf der Netzhaut (110) zu ergeben.

3. Kontaktlinse (100; 100') nach Anspruch 1 oder 2, wobei die optische Quelle (114) monochromatisch und/oder punktförmig ist.

4. Kontaktlinse (100; 100') nach einem der Ansprüche 1 bis 3, beinhaltend ferner einen Lichtleiter (105, 124), der dazu gestaltet ist, das Licht der optischen Quelle (114) zu dem Hologramm (116) zu leiten.

5. Kontaktlinse (100; 100') nach Anspruch 4, wobei der Lichtleiter ein transparentes Substrat (105) und eine Schicht aus reflektierendem Material (124), die eine Außenfläche des transparenten Substrats (105) bedeckt, beinhaltet.

6. Kontaktlinse (100; 100') nach Anspruch 5, wobei mindestens eines unter der optischen Quelle (114) und dem Hologramm (116) im Innern des transparenten Substrats (105) angeordnet ist, so dass es teilweise oder aber vollständig von dem transparenten Substrat (105) umgeben ist.

7. Kontaktlinse (100; 100') nach einem der Ansprüche 1 bis 6, umfassend:
- einen Funkempfänger (Rx), der an dem transparenten Körper (102) befestigt ist und dazu gestaltet ist, einen Befehl (C) zu empfangen; und
- ein Modul zur selektiven Aktivierung (136; 136') jedes Augmented-Reality-Moduls (108) in Abhängigkeit von dem empfangenen Befehl (C).

8. Kontaktlinse (100; 100') nach einem der Ansprüche 4 bis 6 in Kombination mit Anspruch 7, wobei das Modul zur selektiven Aktivierung (136') eine Indexänderungsvorrichtung (140) beinhaltet, die dazu gestaltet ist, einen Brechungsindex des Lichtleiters (105, 124) zu ändern, um die Beleuchtung des Hologramms (116) zu ändern, damit dieses aufhört, das holografische Bild zu ergeben.

9. Kontaktlinse (100; 100') nach Anspruch 8, wobei das Modul zur selektiven Aktivierung (136) dazu gestaltet ist, die optische Quelle (114) zu deaktivieren.

10. Augmented-Reality-Verfahren (500), beinhaltend:
- das Setzen (E1) eines transparenten Körpers (102) einer Kontaktlinse (100) auf ein Auge (104);
- das Emittieren (E4) eines Lichts in den transparenten Körper (102) durch eine optische Quelle (114), die an dem transparenten Körper (102) befestigt ist; und
- das Empfangen (E5) des Lichts durch ein optisches Element (116), das an dem transparenten Körper (102) befestigt ist, und das Senden (E7) des Lichts in Richtung des Auges (104) durch das optische Element (116);
wobei das von der optischen Quelle (114) emittierte und von dem optischen Element (116) empfangene Licht kein Bild beinhaltet und das optische Element (116) ein Hologramm ist, das das empfangene Licht bricht, um ein holografisches Bild in Richtung des Auges (104) zu erzeugen, **dadurch gekennzeichnet, dass** die Kontaktlinse einen zentralen Bereich (120) aufweist, der nur aus dem transparenten Körper (102) gebildet wird, wobei sich der zentrale Bereich auf der optischen Achse des Auges (AO), vor der Pupille (123), befindet, wenn der transparente Körper auf das Auge (104) in seiner bevorzugten Position (10) gesetzt ist.

## Claims

1. Augmented reality contact lens (100; 100') comprising:
- a transparent body (102) designed to be placed on an eye (104);
- at least one augmented reality module (108) comprising:
• an optical source (114) attached to the transparent body (102) and designed to emit light into the transparent body (102);
• an optical element (116) attached to the transparent body and designed to receive the light from the optical source (114) and send it in the direction of the eye (104);
wherein the optical source (114) is designed to emit light, received by the optical element (116) and containing no image, and in that the optical element (116) is a hologram designed to diffract the received light in order to create a holographic image in the direction of the eye (104), **characterized in that** the contact lens has a central area (120) formed solely by the transparent body (102), the central area being on the optical axis of the eye (AO), in front of the pupil (123), when the transparent body is placed on the eye (104) in its preferred position (10).

2. Lens according to Claim 1, comprising a plurality of augmented reality modules (108), each module (108) being designed to provide a different final image on the retina (110).

3. Contact lens (100; 100') according to Claim 1 or 2, wherein the optical source (114) is a monochromatic and/or point source.

4. Contact lens (100; 100') according to one of Claims 1 to 3, further comprising an optical guide (105, 124) designed to guide the light from the optical source (114) to the hologram (116).

5. Contact lens (100; 100') according to Claim 4, wherein the optical guide comprises a transparent substrate (105) and a layer of reflective material (124) covering an outer surface of the transparent substrate (105).

6. Contact lens (100; 100') according to Claim 5, wherein of the optical source (114) and the hologram (116) at least one is disposed within the transparent substrate (105) so as to be partially or completely surrounded by the transparent substrate (105).

7. Contact lens (100; 100') according to any one of Claims 1 to 6 comprising:
- a radio receiver (Rx) attached to the transparent body (102) and designed to receive a command (C); and
- a selective-activation module (136; 136') for selective activation of each augmented reality module (108) according to the command (C) received.

8. Contact lens (100; 100') according to any one of Claims 4 to 6 when taken together with Claim 7, wherein the selective-activation module (136') includes an index modifying device (140) designed to modify a refractive index of the optical guide (105, 124) in order to modify the illumination of the hologram (116) so that it ceases to provide the holographic image.

9. Contact lens (100; 100') according to Claim 8, wherein the selective-activation module (136) is designed to deactivate the optical source (114).

10. Augmented reality method (500) comprising:
- the fitting (E1) of a transparent body (102) of a contact lens (100) on an eye (104);
- the emission (E4) of light into the transparent body (102) by an optical source (114) attached to the transparent body (102); and
- the reception (E5) of the light by an optical element (116) attached to the transparent body (102) and the sending (E7) of the light in the direction of the eye (104) by the optical element (116);
wherein the light emitted by the optical source (114), and received by the optical element (116), contains no image and the optical element (116) is a hologram diffracting the received light in order to create a holographic image in the direction of the eye (104), **characterized in that** the contact lens has a central area (120) formed solely by the transparent body (102), the central area being on the optical axis of the eye (AO), in front of the pupil (123), when the transparent body is placed on the eye (104) in its preferred position (10).
